# EUROPÄISCHE PATENTANMELDUNG

(11) **EP 0 900 947 A2**
(43) Veröffentlichungstag der Anmeldung: **10.03.1999**
(21) Anmeldenummer: 98250287.4
(22) Anmeldetag: 12.08.1998
(51) Int. Cl.: F16D 65/56

(54) **Betätigungseinrichtung für verschleissspielbehaftete Maschinenelemente, insbesondere für Bremsen von Schienenfahrzeugen**

(30) Priorität: 04.09.1997 DE 19739698
(71) Anmelder: MANNESMANN Aktiengesellschaft, 40213 Düsseldorf (DE)
(72) Erfinder: Kemner, Axel, Dipl.-Ing., 30916 Isernhagen (DE); Stoffels, Ralf, Dipl.-Ing., 29593 Schwienau (DE)
(74) Vertreter: Meissner, Peter E., Dipl.-Ing.

(57) **Zusammenfassung**

Die Erfindung betrifft eine Betätigungseinrichtung für verschleißspielbehaftete Maschinenelemente, insbesondere für Bremsen von Schienenfahrzeugen, mit einer druckmittelbetriebenen Kolben-Zylinder-Einheit, deren Kolbenstange mit einer verchleißspielausgleichenden Nachstelleinrichtung in Form einer drehsicherbaren Mutter-Spindel-Baugruppe verbunden ist. Die Kolbenstange (5) ist hohl ausgebildet und in ihr ist die Spindel (14) drehbar angeordnet, deren Kopfbereich (16) drehbar mit dem Maschinenelement verbunden ist, wobei eine auf den Kolben (2) und drehbar auf die Spindel sich abstützende Feder (23) gegen die Verdrehsicherung (19) der Spindel wirkt und auf einem am Zylinder (3,6,7) befestigtes Bezugselement (20,21) ein die Verschiebung des Kolbens gegenüber dem Bezugselement (20,21) und ein die Verschiebung zwischen Spindel und Kolben erfassender Wegaufnehmer vorgesehen ist, wobei das Signal des Wegaufnehmers über ein Kabel (22) einer Steuereinheit zugeführt wird, die Steuerungsmäßig mit der Betätigung der Drehsicherungsvorrichtung (19) verbunden ist.

## Beschreibung

Die Erfindung betrifft eine Betätigungseinrichtung für verschleißspielbehaftete Maschinenelemente, insbesondere für Bremsen von Schienenfahrzeugen gemäß dem Oberbegriff des Patentanspruches 1.

Als verschleißspielbehaftete Maschinenelemente im Sinne der vorliegenden Erfindung werden Maschinenelemente wie Kupplungen oder Bremsen angesehen. Derartige Maschinenelemente werden insbesondere als Übertragung von Antriebs- bzw. Bremskräften bei Schienenfahrzeugen eingesetzt. Zum Unterbrechen und Schließen des Kraftflusses kommen Beläge zum Einsatz, die zum einen hohen thermischen Beanspruchungen standhalten und zum anderen einen günstigen Kraftflußverlauf ermöglichen. Diese Beläge unterliegen einem Verschleiß, der ein sich allmählich vergrößerndes Verschleißspiel verursacht. Zum Ausgleich dieses Verschleißspiels sind Nachstelleinrichtungen bekannt.

So geht beispielsweise aus der EP 0 174 690 eine Nachstelleinrichtung nach Art einer Stellmutter-Spindel-Baugruppe zum Verschleißspielausgleich für Bremsen hervor. Diese Nachstelleinrichtung baut auf eine Steuerhülse auf, die unter Federkraft stehend über eine erste Kupplung verhindert, dass eine Stellmutter über eine Drehbewegung einer Längsverstellung der Kolbenspindel und insoweit eine Nachstellung bewirkt. Nach Durchlaufen eines vorbestimmten Spielweges wird durch Verschieben der Kolbenstange über einen bestimmten Weg hinaus die erste Kupplung gelöst, so dass die Verstellung des Spielweges entsprechend dem eingetretenen Belagverschleiß erhöht werden kann. Eine weitere Kolbenvorschubbewegung hat das Einkuppeln einer zweiten Kupplung zur Folge, so dass darauf hin die Verstellung der Stellmutter auf der Spindel gestoppt wird. Dieser komplizierte Mechanismus für das Ein- und Auskuppeln der Stellmutter verursacht einen hohen Bauteil-Montageaufwand für die Fertigung dieser Nachstelleinrichtung. Andererseits stellt der Einsatz des zugrundeliegenden Stellmutter-Spindel-Prinzips zur Nachstellung jedoch eine recht robuste Lösung dar, die sich in der Praxis bewährt hat.

Bei den bekannten Nachstelleinrichtungen ist eine Verstellung der Stellmutter-Spindel-Baugruppe zum Spielausgleich nur bei Lastwechsel unter Durchfahren eines verschleißverursachenden Kupplungsvorganges möglich. Ein weiteres Problem bekannter Nachstelleinrichtungen stellt der von hohen Zylinderhüben zum Betrieb des Nachstellmechanismus verursachte hohe Druckmittelverbrauch dar.

Der Erfindung liegt daher die Aufgabe zugrunde, eine Betätigungseinrichtung für verschleißspielbehaftete Maschinenelemente, insbesondere für Bremsen von Schienenfahrzeugen, zu schaffen, die sich durch einen einfachen und mit wenigen Teilen aus-kommenden Mechanismus zur Verschleißspielnachstellung auszeichnet und für deren Nachstellung kein Druckmittel erforderlich ist.

Die Erfindung wird ausgehend von einer Betätigungseinrichtung gemäß dem Oberbegriff des Patentanspruches 1 in Verbindung mit dessen kennzeichnenden Merkmalen gelöst. Vorteilhafte Ausgestaltungen sind Bestandteil von Unteransprüchen.

Die Erfindung schließt die technische Lehre ein, dass die Kolbenstange hohl ausgebildet und in ihr die Spindel drehbar angeordnet ist, deren Kopfbereich drehbar mit dem Maschinenelement, z. B. mit einem Bremsgestänge verbunden ist. Die Drehbewegung der Spindel wird über ein an der Kolbenstange angeordnetes Innen- und ein komplementär dazu ausgebildetes an der Spindel angeordnetes Außengewinde ermöglicht, wobei aus Gründen der Leichtgängigkeit das Gewinde vorzugsweise als mehrgängiges Trapezgewinde mit hoher Steigung ausgebildet ist. Die Drehbewegung und damit die Nachstellung selbst wird durch eine Feder bewirkt, die sich zum einen auf den Kolben bzw. den Boden der hohen Kolbenstange und zum anderen drehbar in einer zylindrischen Ausnehmung der Spindel abstützt. Da die Feder bei der Drehbewegung der Spindel sich nicht mitdrehen soll, ist die Anordnung eines Lagers am Boden der Ausnehmung der Spindel erforderlich. Bei betriebsüblicher Betätigung der Einrichtung z. B. einer Bremse ist die Drehbewegung der Spindel mittels einer Drehsicherungsvorrichtung blockiert. Dazu sind auf dem Außenmantel der Spindel mehrere symmetrisch über den Umfang verteilt angeordnete Längsnuten vorgesehen, in die ein Stift der Drehsicherungsvorrichtung eingreifen kann. Die Drehsicherungsvorrichtung besteht aus einer Kolben-Zylinder-Einheit, die am Kopf der hohlen Kolbenstange befestigt ist und deren Kolbenstange den Stift bildet.

Die Feststellung des Verschleißzustandes, z. B. des Bremsbelages wird über den Weg, den eine mit der Spindel verbundene Stange gegenüber einem am Zylindergehäuse befestigten Rohr zurücklegt, festgestellt, wobei die Stange längsverschiebbar im Rohr angeordnet ist. Dazu ist am feststehenden Rohr ein berührungslos arbeitender Sensor, z. B. ein Potentiometer angeordnet, dessen Verstimmung durch die Bewegung der Stange als Signal abgegriffen wird. Dieses Signal wird über Kabel einer Steuereinheit zugeführt, die steuerungsmäßig mit der Betätigung der Drehsicherungsvorrichtung verbunden ist. Wird nun über diese Meßmethode ein entsprechender Verschleiß z. B. des Bremsbelages festgestellt, dann wird der Stift der Drehsicherungsvorrichtung gezogen und über die Feder die Spindel in Drehbewegung versetzt. Der Weg, den die Spindel gegenüber der hohlen Kolbenstange zurücklegt, wird über den gleichen zuvor beschriebenen Sensor erfaßt, so dass nach Zurücklegen eines vorgegebenen Weges der Stift der Drehsicherungsvorrichtung in einer der Längsnuten wieder einrasten kann. Je nach den Verhältnissen kann die Nachstellung noch ein zweites oder drittes Mal in der gleichen Weise erfolgen. Ist danach das Endmaß der Nachstellmöglichkeiten erreicht, muß beispielsweise der Bremsbelag ausgewechselt werden.

In Weiterbildung der Erfindung kann man den Kolben auch senkrecht zur Spindelachse anordnen und die Kraft über einen Keil und ein damit zusammenwirkendes an der hohlen Kolbenstange befestigtes Wälzlager bewirken. Vorzugsweise wird die Unterseite des Keiles auf ein am Zylinderinnengehäuse angeordnetes Linearlager geführt. Diese Anordnung ermöglicht eine Übersetzung, so dass größere Kräfte übertragbar sind und verkleinert das Baumaß der Betätigungseinrichtung in der Breite. Die Betätigungseinrichtung kann unabhängig davon, ob der Kolben achsgleich oder senkrecht zur Spindelachse angeordnet ist, mit einer Feststellbremse versehen sein, so dass damit sowohl die normale Betriebsfunktion als auch die Feststellfunktion realisierbar ist.

Die Vorteile der vorgeschlagenen Betätigungseinrichtung sind darin zu sehen, dass die drehbare Spindel in der hohen Kolbenstange angeordnet ist und für die Drehbewegung zum Nachstellen nur eine in der Betätigungseinrichtung angeordnete Feder und keine separate Einrichtung erforderlich ist. Somit sind nur wenige Teile notwendig, die auch nahezu verschleißfrei sind. Die Betätigungseinrichtung ist damit auch jederzeit funktionstüchtig und beansprucht weniger Bauraum als die bekannten Betätigungseinrichtungen. Eine gesonderte Druckmittelzufuhr für die Betätigung der Nachstelleinrichtung entfällt bei der vorgeschlagenen Einrichtung.

In der Zeichnung wird anhand einiger Ausführungsbeispiele die erfindungsgemäß ausgebildete Betätigungseinrichtung näher erläutert. Es zeigen:
- Figur 1a: einen Längsschnitt durch eine erste Ausführungsform einer erfindungsgemäß ausgebildeten Betätigungseinrichtung
- Figur 1b: einen Schnitt in Richtung A-A in Figur 1a
- Figur 2a: einen Längsschnitt durch eine zweite Ausführungsform
- Figur 2b: einen Schnitt in Richtung A-A in Figur 2a
- Figur 2c: einen Schnitt in Richtung B-B in Figur 2a
- Figur 3a: einen Längsschnitt durch eine Variante der zweiten Ausführungsform gemäß Figur 2a
- Figur 3b: einen Schnitt in Richtung A-A in Figur 3a

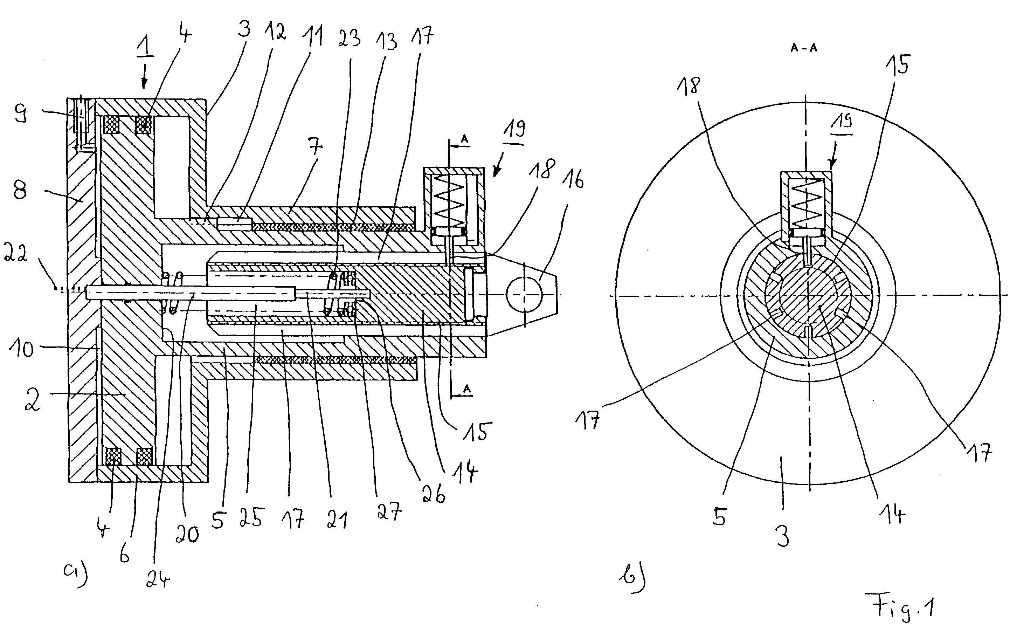

In Figur 1 ist in einem Längs- und einem Schnitt in Richtung A-A eine erste Ausführungsform der erfindungsgemäß ausgebildeten Betätigungseinrichtung dargestellt. Sie besteht aus einer Kolben-Zylinder-Einheit 1, die einen Kolben 2, eine daran befestigte hohle Kolbenstange 5 und ein Zylindergehäuse 3 aufweist. Der Kolben 2 wird mittels Dichtungen 4 abgedichtet im Zylindergehäuse 3 axial verschiebbar geführt. Das Zylindergehäuse 3 weist einen Abschnitt 6 mit einem dem Kolben 2 angepassten großen Innendurchmesser und einen daran anschließenden Abschnitt 7 mit einem der hohlen Kolbenstange 5 angepaßten kleineren Innendurchmesser auf. Der einen größeren Durchmesser aufweisende Abschnitt 6 des Zylindergehäuses 3 ist mit einem Deckel 8 verschlossen. Durch diesen Deckel 8 erstreckt sich ein abgewinkelter Kanal mit der-Öffnung 9 für den Anschluß der Druckmittelzufuhr. Diese Öffnung 9 mündet in einer zwischen Deckel 8 und Kolben 2 sich bildenden Druckkammer 10 der Kolben-Zylinder-Einheit 1. Damit der Kolben 2 mitsamt der hohlen Kolbenstange 5 sich bei der Verschiebung nicht drehen kann, ist beispielsweise im einen kleineren Durchmesser aufweisenden Abschnitt 7 des Zylindergehäuses 3 eine Längsnut 11 angeordnet. In diese greift eine Nase 12 der hohlen Kolbenstange 5 ein. Zur Führung der hohlen Kolbenstange 5 in den einen kleineren Durchmesser aufweisenden Abschnitt 7 des Zylindergehäuses 3 ist innenseitig eine Manschette 13 angeordnet, die die hohle Kolbenstange 5 umfaßt. Erfindungsgemäß ist in der hohlen Kolbenstange 5 eine Spindel 14 drehbar angeordnet. Die Drehung erfolgt über ein im vorderen Bereich der hohlen Kolbenstange 5 angeordnetes Innengewinde und einen dazu komplementär an der Spindel 14 angeordnetes Außengewinde 15. Vorzugsweise ist das Gewinde als mehrgängiges Trapezgewinde mit hoher Steigung ausgebildet. Am Kopf der Spindel 14 ist drehbar ein Halteelement 16 angeordnet, das mit einem hier nicht dargestellten Maschinenelement, z. B. Bremsgestänge, verbindbar ist. Zur Drehsicherung der Spindel 14 sind über den Umfang symmetrisch verteilt Längsnuten 17 angeordnet. Hier in diesem Ausführungsbeispiel sind es insgesamt sechs Längsnuten 17. In diesen Längsnuten 17 kann ein Mittel einer Drehsicherungsvorrichtung 19 eingreifen, wobei in diesem Ausführungsbeispiel diese als Kolben-Zylinder-Einheit ausgebildet ist, mit einer als Stift 18 ausgebildeten Kolbenstange. Auf die Darstellung der Einzelheiten des Anschlusses dieser Drehsicherungsvorrichtung 19 wurde hier verzichtet. Die Wegmessung zur Feststellung der Verschleißrate und zur Erfassung des Verschiebeweges der Spindel 14 gegenüber dem Kolben 2 erfolgt mittels eines im Deckel 8 befestigten Rohres 20, in das eine in der Spindel 14 befestigte Stange 21 axial einschiebbar ist. Am Rohr 20 ist ein Sensor (hier nicht dargestellt) angeordnet, dessen Verstimmung in ein elektrisches Signal umgewandelt wird. Die elektrische Zuleitung 22 zum Sensor ist durch eine punktierte Linie hier angedeutet. Die Drehung der Spindel 14 und damit die gewünschte Nachstellung erfolgt mittels einer Feder 23, die sich zum einen am Boden 24 der hohlen Kolbenstange 5 und zum anderen in einer zylindrischen Ausnehmung 25 der Spindel 14 abstützt. Damit die Feder 23 sich beim Drehen der Spindel nicht mitdrehen kann, ist am Boden 26 der zylindrischen Ausnehmung 25 ein Wälzlager 27 angeordnet.

Nachfolgend wird die Arbeitsweise der erfindungsgemäß ausgebildeten Betätigungseinrichtung erläutert. Über die Öffnung 9 strömt Druckmittel, beispielsweise Luft in den Druckraum 10 und schiebt den Kolben 2 nach rechts. Die mit dem Kolben 2 verbundene hohle Kolbenstange 5 wird ebenfalls nach rechts verschoben. Bei eingerastetem Stift 18 in einer der Längsnuten 17 der Spindel 14 wird bei der Verschiebung des Kolbens 2 die Spindel 14 an einer Drehung gehindert. Da an der Spindel 14 drehbar ein Halteelement 16 befestigt ist, bewegt sich entsprechend dem Hub des Kolbens 2 dieses Halteelement 16 ebenfalls nach rechts. Ist an diesem Halteelement 16 beispielsweise ein Bremsgestänge befestigt, so wird der an der Bremse angeordnete Bremsbelag zunehmend auf die Bremsscheibe gedrückt und das bewegte Element abgebremst. Bei diesem Vorgang wird der Bremsbelag mit der Zeit verschlissen, so dass der Kolben 2 einen immer größeren Hub benötigt, um die gewünschte Bremswirkung zu erzeugen. Hat die Verschleißrate einen bestimmten Wert erreicht, dann wird dies durch den Wegsensor angezeigt. In diesem Fall wird nach Zurückfahren des Kolbens 2 in die Ausgangsstellung der Stift 18 gezogen und die Kraft der Feder 23 reicht aus, um die Spindel 14 in Drehung zu versetzen. Je nach Steigung des Gewindes 15 bedeutet eine Umdrehung der Spindel 14 einen Vorschub von x mm. Durch den Wegsensor wird dieser Vorschub erfaßt. Hat er den festgelegten Wert erreicht, läßt man den Stift 18 wieder in eine der Längsnuten 17 der Spindel 14 einrasten. Das Halteelement 16 steht entsprechend diesem Vorschub weiter vorn und somit der Bremsbelag näher an der Bremsscheibe. Nachfolgend kann der Kolben 2 wieder seinen üblichen Hub ausführen. Je nach den Verhältnissen kann diese Art der Nachstellung noch ein oder zweimal erfolgen. Danach müßte der Bremsbelag ausgewechselt werden, wobei die Spindel 14 dann in die Ausgangslage wieder zurückbewegt wird.

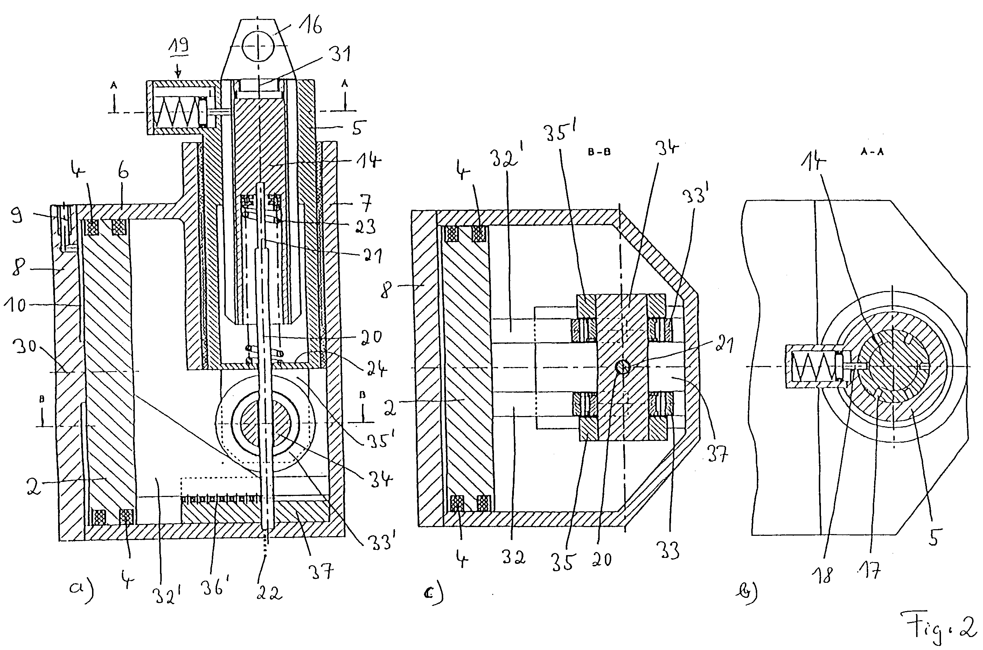

In den Figuren 2a bis 2c ist eine zweite Ausführungsform der erfindungsgemäß ausgebildeten Betätigungseinrichtung dargestellt, wobei für gleiche Teile gleiche Bezugszeichen verwendet worden sind.

Im Unterschied zur Ausführungsform gemäß den Figuren 1a bis 1b steht die Achse 30 des Kolbens 2 senkrecht auf der Achse 31 der Spindel 14. Der Kolben 2 und die hohle Kolbenstange 5 sind voneinander getrennt. Die Kraftübertragung vom Kolben 2 auf die Spindel 14 erfolgt über zwei mit dem Kolben 2 verbundene Keile 32, 32', auf denen sich zwei Wälzlager 33, 33' zabwälzen. Die Wälzlager 33, 33' sind auf einem Zapfen 34 angeordnet, der sich in Bohrungen zweier Laschen 35, 35' abstützt, wobei die Laschen 35, 35' mit der hohen Kolbenstange 5 fest verbunden sind. Die Längsverschiebung der Keile 32, 32' erfolgt über Linearlager 36, 36', die sich auf einer gehärteten Unterlage 37 abstützen. Diese Anordnung hat den Vorteil, dass man damit eine Kraftübersetzung geschaffen hat und die Breite der Anordnung schmaler ist im Vergleich zur Anordnung gemäß Figur 1a, 1b.

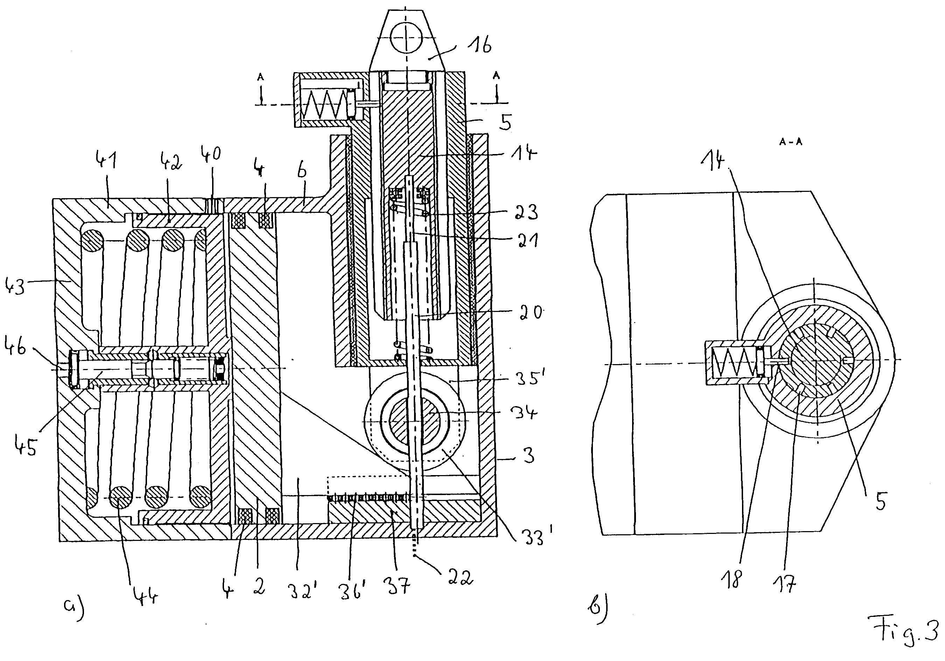

Figur 3a, 3b zeigt eine Variante der Ausführungsform gemäß den Figuren 2a bis 2c. Diese hier dargestellte Variante vereint eine Feststell- sowie eine Bremsfunktion. Die Betriebsbremsfunktion wird über den Kolben 2 und den damit in den Figuren 2a bis 2c beschriebenen Übertragungsmechanismus realisiert. Der Kolben 2 ist über eine Öffnung 40 mit Druckmittel beaufschlagbar. Der Kolben 2 ist über das hier nicht dargestellte Bremsgestänge federrückgestellt. Neben dieser Betriebsbremse ist auch eine Feststellbremse in einem separaten Zylindergehäuse 41 angeordnet, wobei dieses koaxial an das zuvor beschriebene Zylindergehäuse 3 angeschlossen ist. Die Feststellbremse ist nach Art eines Federspeicherzylinders ausgeführt. Sie besitzt einen Anschlagkolben 42, der koaxial gegenüber dem Kolben 2 angeordnet ist und ebenfalls über die Öffnung 40 zur Rückstellung beaufschlagbar ist. Auf der anderen Seite des Anschlagkolbens 42 wirkt eine zwischen dem Deckel 43 des Zylindergehäuses 41 und dem Anschlagkolben 2 angeordnete Feder 44. In der in dieser Darstellung ersichtlichen Ruheposition der Feststellbremse, d. h. im unbetätigten Zustand, ist die Feder 44 gespannt. Eine Entriegelungseinheit nach Art einer Kugelsperre ermöglicht das Auslösen der Feststellbremse. Dazu wird eine integrierte Kolben-Zylinder-Einheit 45 über eine im Deckel 43 angeordnete Öffnung 46 mit Druckmittel beaufschlagt, so dass über den Kolben der Entriegelungseinheit die Feststellbremse ausgelöst wird. Alternativ ist dies mechanisch auch über ein Stößel möglich. Nach dem Lösen der Sperre bewegt die Kraft der Feder 44 den Anschlagkolben 42 in Richtung Kolben 2 und veranlaßt diesen zur Bremsbetätigung. Damit ist die Feststellbremse ausgelöst. Zur Rückstellung in die Ruheposition wird über die Öffnung 40 Druckmittel aufgegeben. Dabei verharrt konstruktionsbedingt der Kolben 2 so lange in der Betätigungsstellung der Bremse, bis der Anschlagkolben 42 der Feststellbremse wieder arretiert ist. Durch nachfolgendes Entlüften wird die Bremse wieder freigegeben.

## Patentansprüche

1. Betätigungseinrichtung für verschleißspielbehaftete Maschinenelemente, insbesondere für Bremsen von Schienenfahrzeugen, mit einer druckmittelbetriebenen Kolben-Zylinder-Einheit, deren Kolbenstange mit einer verschleißspielausgleichenden Nachstelleinrichtung in Form einer drehsicherbaren Mutter-Spindel-Baugruppe verbunden ist,
dadurch gekennzeichnet,
dass die Kolbenstange (5) hohl ausgebildet und in ihr die Spindel (14) drehbar angeordnet ist, deren Kopfbereich (16) drehbar mit dem Maschinenelement verbunden ist, wobei eine auf den Kolben (2) und drehbar auf die Spindel sich abstützende Feder (23) gegen die Verdrehsicherung (19) der Spindel wirkt und auf einem am Zylinder (3,6,7) befestigtes Bezugselement (20,21) ein die Verschiebung des Kolbens gegenüber dem Bezugselement (20,21) und ein die Verschiebung zwischen Spindel und Kolben erfassender Wegaufnehmer vorgesehen ist, wobei das Signal des Wegaufnehmers über ein Kabel (22) einer Steuereinheit zugeführt wird, die steuerungsmäßig mit der Betätigung der Drehsicherungsvorrichtung (19) verbunden ist.

2. Betätigungseinrichtung nach Anspruch 1,
dadurch gekennzeichnet,
dass der Endbereich der hohlen Kolbenstange mit einem Innengewinde und der Mantelbereich der Spindel mit einem komplementär dazu ausgebildeten Außengewinde versehen ist.

3. Betätigungseinrichtung nach Anspruch 1,
dadurch gekennzeichnet,
dass das Gewinde als mehrgängiges Trapezgewinde mit hoher Steigung ausgebildet ist.

4. Betätigungseinrichtung nach den Ansprüchen 1 - 3,
dadurch gekennzeichnet,
dass die Spindel mehrere symmetrisch über den Umfang verteilt angeordnete Längsnuten aufweist, in die ein Mittel einer außerhalb der Kolben-Zylinder-Einheit am oberen Ende der hohlen Kolbenstange außen angeordnete Drehsicherungsvorrichtung einschiebbar ist.

5. Betätigungseinrichtung nach Anspruch 4,
dadurch gekennzeichnet,
dass das Mittel eine als Stift ausgebildete Kolbenstange einer federbelasteten Kolben-Zylinder-Einheit ist.

6. Betätigungseinrichtung nach einem der Ansprüche 1 - 5,
dadurch gekennzeichnet,
dass die die Drehbewegung der Spindel auslösende Feder im Bodenbereich der hohen Kolbenstange und in einer zylindrischen Ausnehmung der Spindel sich abstützt und am Boden der Ausnehmung der Spindel ein Wälzlager angeordnet ist.

7. Betätigungseinrichtung nach einem der Ansprüche 1 - 6,
dadurch gekennzeichnet,
dass das Bezugselement für den Wegaufnehmer ein am Zylindergehäuse befestigtes und bis in die Ausnehmung der Spindel hineinragendes Rohr ist, in das eine am Boden der Ausnehmung der Spindel befestigte Stange einschiebbar ist.

8. Betätigungseinrichtung nach einem der Ansprüche 1-7,
dadurch gekennzeichnet,
dass die Achse des Kolbens und die der Spindel senkrecht aufeinanderstehen und Kolben und hohle Kolbenstange voneinander getrennt sind und die Kraftübertragung über einen am Kolben befestigten Keil erfolgt, auf den sich ein mit der hohen Kolbenstange verbundenes Wälzlager abwälzt.

9. Betätigungseinrichtung nach Anspruch 8,
dadurch gekennzeichnet,
dass die Unterseite des Keiles auf einem im Zylindergehäuse angeordnetes Linearlager sich verschiebbar abstützt.

10. Betätigungseinrichtung nach einem der vorhergehenden Ansprüche,
dadurch gekennzeichnet,
dass die Kolben-Zylinder-Einheit für eine Feststellbremse einen Anschlagkolben enthält, der nach Art eines Federspeicherzylinders einseitig von einer Feder beaufschlagt ist und zur Arretierung in einer Ruheposition von einer Entriegelungseinheit gehalten ist, wobei der Anschlagkolben zur Bewegung in die Ruheposition entgegengesetzt zur Wirkrichtung der Feder über eine Druckkammer mit Druckmittel beaufschlagbar ist und dass der für eine Betriebsbremse der in der Kolben-Zylinder-Einheit vorgesehene Bremskolben koaxial und benachbart zum Anschlagkolben angeordnet ist und ebenfalls über die gemeinsame Druckkammer mit Druckmittel beaufschlagbar ist.

11. Betätigungseinrichtung nach Anspruch 10.
dadurch gekennzeichnet,
dass die Entriegelungseinheit nach Art einer Kugelsperre ausgeführt ist, die über eine integrierte Kolben-Zylinder-Einheit druckmittelbetrieben oder hilfsweise manuell über einen Stößel betätigbar ist.
